(19) Europäisches Patentamt
European Patent Office
Office européen des brevets

(11) **EP 2 938 526 B1**

(12) **EUROPEAN PATENT SPECIFICATION**

(45) Date of publication and mention
of the grant of the patent:
**24.04.2019 Bulletin 2019/17**

(21) Application number: **13821104.0**

(22) Date of filing: **20.12.2013**

(51) Int Cl.:
*B60W 30/08* (2012.01)   *B60W 40/09* (2012.01)
*G08G 1/16* (2006.01)   *B60W 50/00* (2006.01)
*B60W 10/18* (2012.01)   *B60W 30/09* (2012.01)
*B60W 50/14* (2012.01)

(86) International application number:
**PCT/EP2013/077688**

(87) International publication number:
**WO 2014/102190 (03.07.2014 Gazette 2014/27)**

(54) **METHOD FOR DETERMINING A POINT OF TIME FOR PROVIDING A FUNCTIONALITY BY MEANS OF A DRIVER ASSISTANCE SYSTEM OF A MOTOR VEHICLE, DRIVER ASSISTANCE SYSTEM AND MOTOR VEHICLE**

VERFAHREN ZUR BESTIMMUNG EINES ZEITPUNKTES FÜR EINE FUNKTION MITTELS EINES FAHRERASSISTENZSYSTEMS EINES KRAFTFAHRZEUGS, FAHRERASSISTENZSYSTEM UND KRAFTFAHRZEUG

PROCÉDÉ DE DÉTERMINATION D'UN INSTANT POUR FOURNIR UNE FONCTIONNALITÉ AU MOYEN D'UN SYSTÈME D'ASSISTANCE DE CONDUCTEUR D'UN VÉHICULE À MOTEUR, SYSTÈME D'ASSISTANCE DE CONDUCTEUR ET VÉHICULE À MOTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.12.2012 DE 102012025468**

(43) Date of publication of application:
**04.11.2015 Bulletin 2015/45**

(73) Proprietor: **Valeo Schalter und Sensoren GmbH 74321 Bietigheim-Bissingen (DE)**

(72) Inventors:
• **ROBERT-LANDRY, Caroline**
**F-75018 Paris (FR)**
• **JOULAN, Karine**
**31100 Toulouse (FR)**
• **BREMOND, Roland**
**F-75007 Paris (FR)**
• **HAUTIERE, Nicolas**
**F-94170 Le Perreux sur Marne (FR)**
• **AUBERT, Didier**
**F-91540 Mennecy (FR)**

(74) Representative: **Jauregui Urbahn, Kristian Valeo Schalter und Sensoren GmbH CDA-IP Laiernstraße 12 74321 Bietigheim-Bissingen (DE)**

(56) References cited:
**EP-A1- 1 642 769        WO-A1-03/005325**
**DE-A1- 10 148 539       GB-A- 2 481 915**
**US-A1- 2007 213 883**

• **Claude Bonnet: "Psychologie Cognitive et Psychophysique (3)", , 1 March 2005 (2005-03-01), page 1, XP055149192, Retrieved from the Internet: URL:http://storage.canalblog.com/08/74/188 368/10023575.pdf [retrieved on 2014-10-27]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 938 526 B1

## Description

The invention relates to a method for providing a functionality by means of a driver assistance system of a motor vehicle. In an environmental region of the motor vehicle, an object is detected based on sensor data of a sensor device of the driver assistance system. A current distance of the object from the motor vehicle is determined, and a point of time for providing the functionality is determined depending on the current distance. In addition, the invention relates to a driver assistance system for performing such a method as well as to a motor vehicle with a driver assistance system.

Driver assistance systems for motor vehicles are already known from the prior art in various configuration. Presently, the interest is directed to a driver assistance system serving for avoiding collisions of the motor vehicle with other objects such as for example with another motor vehicle. In particular, a driver assistance system is concerned, which is formed for automatically decelerating the motor vehicle due to a determined risk. In such systems, the distance to an obstacle, typically to a preceding vehicle located in front of the motor vehicle, is sensed by means of a sensor device. Depending on the measured distance, then, a level of risk is determined, in particular the so-called "time to collision" (TTC). Depending on the TTC, then, an automatic braking operation of the motor vehicle can be initiated, if applicable, and/or other measures can be taken, such as for example outputting an acoustic and/or optical and/or haptic warning signal. If the TTC falls below a preset threshold, at least one of the mentioned functionalities is provided.

In the prior art, it is differentiated between fully automatic systems on the one hand as well as semi-autonomous systems on the other hand. In fully autonomous systems, the braking operation is completely controlled by the driver assistance system without the driver having to intervene. The vehicle is decelerated such that collision does not occur. In contrast, in semi-autonomous systems, the motor vehicle is only partially decelerated by the driver assistance system, and additionally an optical and/or haptic and/or acoustic warning signal is output to the driver. Then, the driver himself can complete the braking operation and completely decelerate the motor vehicle by means of the brake pedal or else allow that the driver assistance system reduces the impact energy upon the collision with the obstacle. In addition, systems are known, in which exclusively warning signals are output.

In particular in semi-autonomous systems, the reaction time of the driver presents a substantial role. Namely, the overall stopping distance that the motor vehicle travels until standstill is composed of a reaction distance on the one hand and the braking distance on the other hand. Therein, the reaction distance denotes the distance the motor vehicle travels during the period of time that the driver requires to recognize and resist the dangerous situation, to operate the brake pedal. In contrast, the braking distance denotes the distance that the motor vehicle travels during the time from pressing the brake pedal until standstill. Thus, it becomes apparent that the overall stopping distance not only depends on the braking distance of the motor vehicle, but rather also depends on the reaction time of the driver.

From the document DE 42 01 970 A1, a driver assistance system for motor vehicles is known, which serves for supporting guidance in case of poor visibility conditions, in particular in case of fog. A detecting device determines the presence of an obstacle with the aid of infrared radiation. The driver assistance system also has a measuring device determining the range of the detecting device for sensing the obstacle with the current visibility conditions. By means of a signal evaluation device, a warning signal or else a braking signal for decelerating the motor vehicle is output upon sensing the obstacle from the currently determined range.

Further prior art is known from EP 1 642 769 A1 which shows the features of the preamble of claim 1.

It is an object of the invention to demonstrate a solution how in a method of the initially mentioned kind, the point of time for providing the functionality can be determined depending on the respectively current situation such that collision with the object can be prevented as possible, but the functionality also is not provided too soon.

According to the invention, this object is solved by a method, by a driver assistance system as well as by a motor vehicle having the features according to the respective independent claims. Advantageous implementations of the invention are the subject matter of the dependent claims, of the description and of the figures.

A method according to the invention serves for providing a functionality by means of a driver assistance system of a motor vehicle. For example, automatic deceleration can be initiated and/or a warning signal can be output as the functionality. Based on sensor data of a sensor device of the driver assistance system, an object is detected in an environmental region of the motor vehicle, such as for example a preceding vehicle. Based on the sensor data, the current distance to the object is also determined.

Depending on the current distance, a point of time for providing the functionality is set. According to the invention, it is provided that a reaction time of a driver is determined, which the driver requires for carrying out a maneuver or for taking an action due to the object, and that the point of time for providing the functionality is determined depending on the reaction time of the driver.

The method according to the invention allows providing the functionality at an optimum point of time considering the reaction time of the driver. On the one hand, thus, the functionality can be provided as timely as collision with the object can be prevented. On the other hand, provision of the functionality too soon and thus impairment of the driving comfort is also prevented. Therein, the reaction time of the driver depends on very different parameters, such as for example the object photometry (contrast) and/or the road geometry and/or atmospheric conditions (fog and/or rain) and/or on the brightness level of the environment. Such parameters can for example be determined based on image data of a camera. However, the reaction time is also dependent on characteristics of the driver, such as for example the age and/or the current fatigue and/or the current level of concentration of the driver. If a too great reaction time is overall determined, thus, the functionality can be provided earlier than with a lower reaction time, such that the driver still has enough time to take corresponding actions.

Therein, a time interval is understood by the reaction time, which the driver needs to recognize the dangerous situation - namely the object - and to take a corresponding action such as for example actuating the brake pedal. This reaction time affects the reaction path, which overall results in the mentioned stopping distance together with the braking distance of the motor vehicle.

As point of time for providing the functionality, preferably, a limit value for the time to collision TTC is understood. If the TTC falls below this limit value, thus, the functionality is provided.

According to the invention, the reaction time of the driver is determined according to the Pieron's law. Therein, the Pieron's law describes the dependence of the reaction time on a variable indicating the cognitive ability of the driver with respect to the object. According to the Pieron's law, the reaction time of the driver can be particularly precisely determined depending on situation, namely in particular depending on the current environmental conditions and the like.

Therein, a stimulus intensity of the object is preferably determined for the driver, and the reaction time is determined depending on this stimulus intensity according to the Piéron's law. Therein, the stimulus intensity is the intensity, with which the object affects the optical perception of the driver or with which the driver is able to optically perceive the object. This stimulus intensity affects the reaction time of the driver to a great extent such that the reaction time can be determined depending on the stimulus intensity with very high accuracy.

Preferably, a visibility level of the object can be determined as stimulus intensity, which can be determined in particular based on image data of a camera and/or based on sensor data of an infrared sensor and/or based on sensor data of a lidar sensor. The scientific literature has already addressed the determination of the visibility level of objects based on digital image data. The determination of the visibility level of an object is for example described in the following document: Joulan, K. et al "Contrast Sensitivity Functions for Road Visibility Estimation on Digital Images", IFSTTAR, Paris, France.

In an embodiment, the visibility level of the object is determined depending on at least one of the following parameters: Depending on an object photometry, in particular a contrast of the object with respect to the background (can for example be determined based on images of a camera) and/or depending on atmospheric conditions in the environmental region of the motor vehicle and/or depending on a road geometry and/or depending on the presence of a road infrastructure. Therein, the object photometry is dependent on an optical contrast of the object relative to the background. The larger this contrast is, the better the object can be perceived by the driver and the less the reaction time of the driver is. Within the scope of the determination of atmospheric conditions, preferably, a distance is determined, up to which an object can be perceived and recognized by the driver at all with the existing atmospheric conditions. The road geometry also has some influence on the perception of the object by the driver. The presence of a road infrastructure such as for example a guardrail and/or an acoustic baffle can also influence the visibility of the object. Namely, the object can be covered by a road infrastructure at least in certain areas.

The stimulus intensity - in particular as the visibility level of the object - is preferably determined based on image data of a camera and/or based on sensor data of an infrared sensor and/or based on sensor data of a lidar sensor. In particular the determination of the stimulus intensity based on image data provides for high accuracy in determining the reaction time of the driver. Generally overall, the stimulus intensity can be determined based on sensor data of an optical sensor.

The detection of the object in the environmental region of the motor vehicle can also be effected based on image data of a camera and/or based on sensor data of an infrared sensor and/or based on sensor data of a lidar sensor. Generally overall, the object can be detected based on sensor data of an optical sensor.

The detection of the object is preferably effected by means of one and the same sensor device, by means of which the stimulus intensity is also determined. This sensor device can preferably be an optical sensor device.

It proves advantageous if the reaction time is calculated according to the following formula:

$$ RT = R_0 + \beta \cdot I^{-\alpha}, $$

wherein RT denotes the reaction time to be determined, I denotes the stimulus intensity (preferably the visibility level of the object), and $R_0$, $\alpha$ and $\beta$ each denote a parameter, which can be correspondingly adjusted as a constant and/or as a variable. The above mentioned equation basically describes the Piéron's law and allows determination of the reaction time with high precision depending on the current situation.

Preferably, it is provided that the reaction time is determined depending on a brightness level of the environmental region. Therein, the brightness level can also be determined based on image data of a camera. If the above mentioned formula is used for calculating the reaction time, thus, the parameter $\alpha$ can be adjusted de-

pending on the brightness level of the environmental region. It can be differentiated between three brightness levels, namely between scotopic vision, mesopic vision and photopic vision. Depending on the current brightness level of the environment, then, the parameter $\alpha$ is correspondingly adapted. This allows the calculation of the reaction time depending on the current brightness level of the environment and accordingly with high accuracy.

In an embodiment, it can also be provided that the reaction time is determined depending on at least one characteristic of the driver. This characteristic can be optionally sensed in the operation of the vehicle and/or it can be stored in the driver assistance system. As the characteristic of the driver, for example, the age (can be stored) and/or the current fatigue level (can be sensed in the operation) and/or the current concentration level (can also be sensed) can be taken into account. Methods for sensing the fatigue level and the concentration level of the driver are already known from the prior art. If the above formula is used, thus, these characteristics optionally can affect the remaining parameters $R_0$ and/or $\beta$. Thus, the reaction time is not only dependent on the external conditions thus independent of the driver himself, but additionally also on the specific driver currently driving the motor vehicle. The accuracy of the determination of the reaction time can therefore be further increased.

The provision of the functionality by means of the driver assistance system can include that the motor vehicle is at least partially automatically decelerated and/or a warning signal is output in the interior of the vehicle by means of an electronic output device. Preferably, the driver assistance system is a semi-automatic braking system, by means of which interventions in the braking system of the motor vehicle can be performed and/or a warning signal can be output to the driver.

For determining the point of time for providing the functionality, a current road condition of the roadway can also be determined. The point of time for providing the functionality can then be determined depending on the current road condition. The current road condition can in particular be determined based on image data of a camera. Therein, first, atmospheric conditions can be determined, and it can be determined if the motor vehicle is driven in fog and/or rain. Depending on these atmospheric conditions, then, the road condition can be inferred, in particular to the effect whether or not currently a slippery roadway is present and thus whether or not danger of slipping currently exists. This too can affect the determination of the optimum point of time for providing the functionality. Namely, the road condition has a great influence on the braking distance of the motor vehicle.

Furthermore, the invention relates to a driver assistance system for a motor vehicle, wherein the system is formed for performing a method according to the invention.

A motor vehicle according to the invention includes a driver assistance system according to the invention.

The preferred embodiments presented with respect to the method according to the invention and the advantages thereof correspondingly apply to the system according to the invention as well as to the motor vehicle according to the invention.

Now, the invention is explained in more detail based on a preferred embodiment as well as with reference to the attached drawings.

There show:

Fig. 1 in schematic illustration a road situation with a motor vehicle according to an embodiment of the invention;

Fig. 2 a flow diagram of a method according to an embodiment of the invention; and

Fig. 3 a dependence of a reaction time on a stimulus intensity according to the Piéron's law.

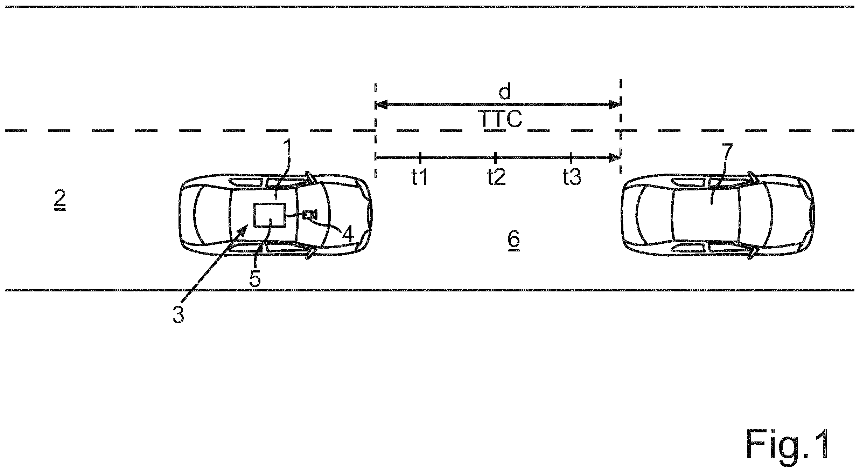

In Fig. 1, a road situation is shown, in which a motor vehicle 1 according to an embodiment of the invention is on a road 2. The motor vehicle 1 includes a driver assistance system 3, which is formed as a semi-automatic braking system in the embodiment. The driver assistance system 3 includes a camera 4 as a sensor device as well as an electronic control device 5 in the form of a digital signal processor and/or microcontroller. The control device 5 is electrically coupled to the camera 4.

The camera 4 is for example a CCD camera or a CMOS camera. It is a video camera, which is able to capture a plurality of frames per second. The camera 4 is a front camera providing images of an environmental region 6 in direction of travel in front of the motor vehicle 1.

The control device 5 can provide at least one functionality in the motor vehicle 1, which serves for preventing a collision with an object, in particular with a preceding vehicle 7. For example, this functionality can include automatic deceleration and/or the output of warning signals in the motor vehicle 1.

Based on image data of the camera 4, the control device 5 can detect the object 7 and determine a distance d to the object 7 (to the preceding vehicle 7). For determining the distance d, optionally, another sensor device can also be used, such as for example an infrared sensor and/or a lidar sensor and/or a radar sensor.

From the distance d, the control device 5 can determine the current time to collision TTC. This time to collision TTC represents a risk level and thus the risk of collision with the vehicle 7. If a risk is recognized, thus, various safety measures can then be taken and thus different functionalities can be provided.

For providing different functionalities, therein, different points of time t1, t2, t3 can be determined. In the embodiment, three different groups of functionalities can be defined, which are provided at different points of time t1, t2, t3 before a theoretical collision with the vehicle 7. These groups can be defined as follows:

The first group of functionalities can be provided at the time t1 (if TTC = t1 of if TTC > t2). This group can include the following functionalities:

- improvement of the visibility by turning on an additional light source, in particular a headlight,
- activation of a windshield wiper, and
- preparation of a strategy for further procedure.

A second group of functionalities can be provided at the point of time TTC = t2 (or if t3 < TTC < t2). This second group of functionalities can include the following measures:

- outputting a warning signal to the driver, for example an optical and/or acoustic and/or haptic warning signal,
- operating the braking system and thus initiating an automatic braking operation, as well as
- determining possible maneuvers for preventing the collision.

The third group of functionalities can be provided at the point of time t3 (TTC = t3). The following functionalities can be associated with this third group:

- automatic emergency braking of the motor vehicle 1 by means of the control device 5, as well as
- performing the previously determined maneuvers for preventing the collision.

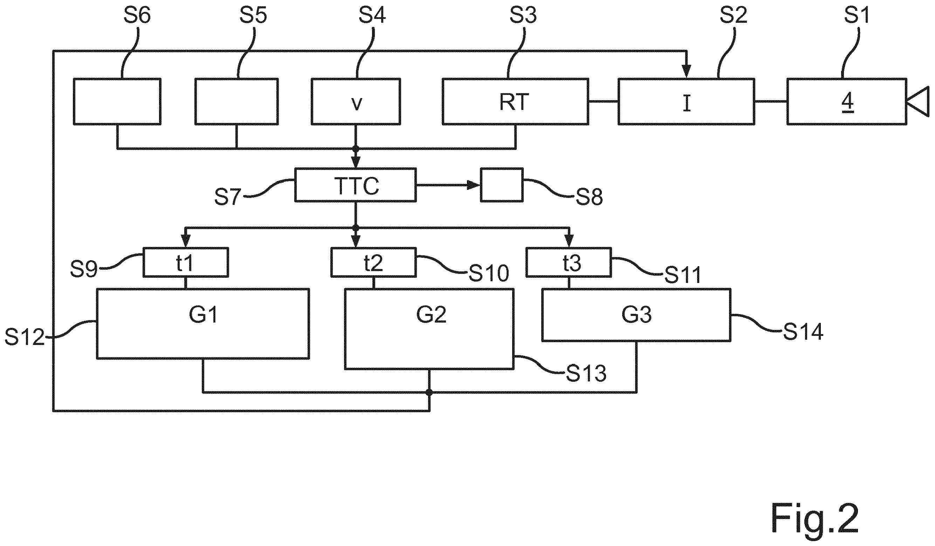

These points of time t1, t2, t3 are set depending on a determined reaction time RT of the driver. This current reaction time RT can for example be continuously determined and thus "online" in the operation of the driver assistance system 3. A method according to an embodiment of the invention is now explained in more detail with reference to Fig. 2.

In a first step S1, the camera 4 provides image data of the environmental region 6 and communicates the image data to the control device 5. In a second step S2, the control device 5 determines a stimulus intensity I of the object 7, thus an intensity, with which the object 7 affects the optical perception of the driver, based on the current image data. Therein, a visibility or a visibility level of the object 7 is determined as the stimulus intensity I. This visibility level is determined depending on the following parameters:

- depending on a contrast of the object with respect to the background determined based on the image data,
- depending on current atmospheric conditions in the environmental region 6 determined based on the image data (fog, rain and the like), as well as
- optionally depending on a road geometry and/or the presence of a road infrastructure.

However, the visibility level can basically be determined in any manner, for example also according to the method as it is described in the document Joulan, K. et al "Contrast Sensitivity Functions for Road Visibility Estimation on Digital Images", IFSTTAR, Paris, France.

In a further step S3, the control device 5 calculates the reaction time RT of the driver depending on the stimulus intensity I. This reaction time RT is calculated according to the following formula:

$$RT = R_0 + \beta \cdot I^{-\alpha}.$$

Therein, RT denotes the reaction time to be determined, while I denotes the stimulus intensity and therefore the visibility level of the object 7. $R_0$, $\alpha$ and $\beta$ are parameters, which can be adjusted in the operation or preset as a constant.

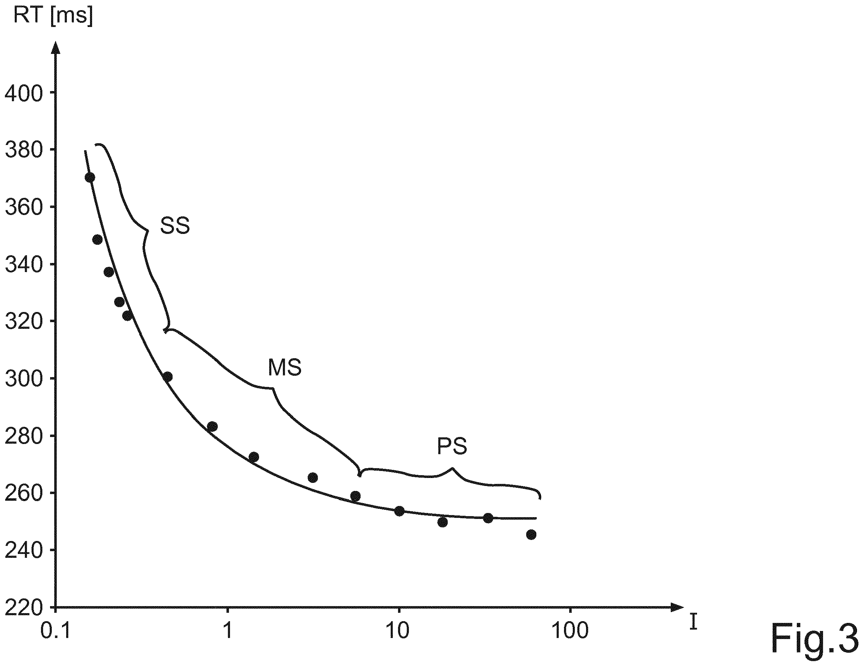

The calculation of the reaction time RT is accordingly effected according to the Piéron's law, which describes the dependence of the reaction time RT on the stimulus intensity I. This dependence is represented in Fig. 3, wherein the reaction time RT is plotted on the y axis and the stimulus intensity I (visibility level) is plotted on the x axis. As is apparent from Fig. 3, the reaction time RT is the lower, the larger the visibility level of the object 7 is. Therein, the differences in the reaction time RT can even be greater than 100 ms.

In determining the reaction time RT according to step S3, the current brightness level of the environmental region 6 is also taken into account. Depending on the brightness level of the environment, the above mentioned parameter $\alpha$ is adjusted. Therein, in Fig. 3, three different ranges of the curve for three different brightness levels of the environmental region 6 are illustrated, namely for photopic vision PS (day vision), for mesopic vision MS (low brightness level, but no darkness) as well as for scotopic vision SS (very low brightness level).

In addition, the reaction time RT can optionally also be calculated depending on at least one characteristic of the driver. Herein, it can be differentiated between currently determined characteristics on the one hand as well as fixed characteristics on the other hand. As fixed characteristic, for example, the age and/or the vision can be taken into account. In contrast, the current fatigue level and/or the current concentration level of the driver can be determined in the operation as variable characteristics. The characteristics of the driver can then for example influence the parameters $\beta$ and $R_0$.

With reference again to Fig. 2, in a step S4, the current velocity v of the motor vehicle 1 is determined. In a step S5, a road condition of the road 2 is determined. It can for example be determined based on the environmental conditions, which are determined based on the image data of the camera 4. In a step S6, the detection of the object 7 is effected, namely for example of a preceding vehicle.

In a further step S7, the control device 5 determines the TTC and furthermore checks whether or not collision with the object 7 is imminent at all. If a collision currently is not imminent (for example, if the object 7 is outside of the trajectory of the motor vehicle 1), thus, the method ends in a step S8. If a possible collision is identified, thus, the above mentioned points of time t1, t2, t3 are set depending on the reaction time RT as well as on the road condition, namely in the steps S9, S10 and S11.

At the point of time t1, thus if TTC = t1, then, the provision of the first group G1 of functionalities is effected according to step S12. According to step S13, at the point of time t2 (if TTC = t2), the provision of the second group G2 of functionalities is effected. Correspondingly, at the point of time t3 (TTC = t3), the provision of the third group G3 of functionalities is effected in the step S14.

Therein, the dependence on the reaction time RT is in that with greater reaction time RT the respective functionalities are provided earlier (with greater TTC) than with a lower reaction time RT. This dependence can for example be a linear dependence.

**Claims**

1. Method for providing a functionality by means of a driver assistance system (3) of a motor vehicle (1), comprising the steps of:

   - detecting an object (7) in an environmental region (6) of the motor vehicle (1) based on sensor data of a sensor device (4) of the driver assistance system (3),
   - determining a current distance (d) of the object (7) from the motor vehicle (1), and
   - determining a point of time (t1, t2, t3) for providing the functionality depending on the current distance (d),
   - determining a reaction time (RT) of a driver, which the driver requires for taking an action due to the object (7) while the point of time (t1, t2, t3) for providing the functionality is determined depending on the reaction time (RT),

   wherein the object (7) is detected based on image data of a camera and/or based on sensor data of an infrared sensor and/or based on sensor data of a lidar sensor as the sensor device (4)
   **characterized in that**
   the reaction time (RT) of the driver is determined according to the Pieron's law.

2. Method according to claim 1,
   **characterized in that**

a stimulus intensity (I) of the object (7) for the driver is determined, and the reaction time (RT) is determined depending on the stimulus intensity (I).

3. Method according to claim 2,
   **characterized in that**
   as the stimulus intensity (I) a visibility level of the object (7) is determined, which is determined depending on at least one of the following parameters:

   - depending on an object photometry, in particular a contrast of the object (7) with respect to a background, and/or
   - depending on atmospheric conditions in the environmental region (6) of the motor vehicle (1), and/or
   - depending on a road geometry and/or the presence of a road infrastructure.

4. Method according to claim 2 or 3,
   **characterized in that**
   the stimulus intensity (I) is determined based on image data of a camera and/or based on sensor data of an infrared sensor and/or based on sensor data of a lidar sensor as the sensor device (4).

5. Method according to anyone of the preceding claims,
   **characterized in that**
   the reaction time (RT) is calculated according to the following formula:

   $$RT = R_0 + \beta \cdot I^{-\alpha},$$

   wherein RT denotes the reaction time to be determined, I denotes the stimulus intensity and $R_0$, $\alpha$ and $\beta$ each denote a parameter.

6. Method according to anyone of the preceding claims,
   **characterized in that**
   the reaction time (RT) is determined depending on a brightness level of the environmental region (6).

7. Method according to anyone of the preceding claims,
   **characterized in that**
   the reaction time (RT) is determined depending on at least one characteristic of the driver, in particular depending on the age and/or on a current fatigue level and/or on a current concentration level of the driver.

8. Method according to anyone of the preceding claims,
   **characterized in that**
   the provision of the functionality by means of the driver assistance system (3) includes that the motor vehicle (1) is at least partially automatically decelerated and/or a warning signal is output by means of an electronic output device.

9. Method according to anyone of the preceding claims, **characterized in that**
by means of the driver assistance system (3), in particular based on image data of a camera (4), a current road condition is determined, and the point of time (t1, t2, t3) for providing the functionality is determined depending on the current road condition.

10. Driver assistance system (3) for a motor vehicle (1), wherein the driver assistance system (3) is formed for performing a method according to anyone of the preceding claims.

11. Motor vehicle (1) with a driver assistance system (3) according to claim 10.


**Patentansprüche**

1. Verfahren zum Bereitstellen einer Funktionalität mithilfe eines Fahrerassistenzsystems (3) eines Kraftfahrzeugs (1), das die folgenden Schritte umfasst:

- Erkennen eines Gegenstands (7) in einem Umgebungsbereich (6) des Kraftfahrzeugs (1) aufgrund von Sensordaten von einer Sensorvorrichtung (4) des Fahrerassistenzsystems (3),
- Ermitteln eines aktuellen Abstands (d) des Gegenstands (7) von dem Kraftfahrzeug (1), und
- Ermitteln eines Zeitpunkts (t1, t2, t3) zum Bereitstellen der Funktionalität in Abhängigkeit von dem aktuellen Abstand (d),
- Ermitteln einer Reaktionszeit (Reaction Time, RT) eines Fahrers, die der Fahrer benötigt, um aufgrund des Gegenstands (7) eine Aktion vorzunehmen, wobei der Zeitpunkt (t1, t2, t3) zum Bereitstellen der Funktionalität in Abhängigkeit von der Reaktionszeit (RT) ermittelt wird,

wobei der Gegenstand (7) aufgrund von Bilddaten einer Kamera und/oder aufgrund von Sensordaten eines Infrarotsensors und/oder aufgrund von Sensordaten eines Lidar-Sensors, der als die Sensorvorrichtung (4) dient, erkannt wird,
**dadurch gekennzeichnet, dass** die Reaktionszeit (RT) des Fahrers gemäß Pierons Gesetz ermittelt wird.

2. Verfahren nach Anspruch 1, **dadurch gekennzeichnet, dass** eine Reizintensität (I) des Gegenstands (7) für den Fahrer ermittelt wird und dass die Reaktionszeit (RT) in Abhängigkeit von der Reizintensität (I) ermittelt wird.

3. Verfahren nach Anspruch 2, **dadurch gekennzeichnet, dass**

als Reizintensität (I) ein Sichtbarkeitspegel des Gegenstands (7) ermittelt wird, der in Abhängigkeit von mindestens einem der folgenden Parameter ermittelt wird:

- abhängig von einer Gegenstandsphotometrie, insbesondere von einem Kontrast des Gegenstands (7) in Bezug auf einen Hintergrund, und/oder
- abhängig von den atmosphärischen Bedingungen in dem Umgebungsbereich (6) des Kraftfahrzeugs (1), und/oder
- abhängig von einer Straßengeometrie und/oder dem Vorhandensein einer Straßeninfrastruktur.

4. Verfahren nach Anspruch 2 oder 3, **dadurch gekennzeichnet, dass**
die Reizintensität (I) aufgrund von Bilddaten einer Kamera und/oder aufgrund von Sensordaten eines Infrarotsensors und/oder aufgrund von Sensordaten eines Lidar-Sensors, der als die Sensorvorrichtung (4) dient, ermittelt wird.

5. Verfahren nach einem der vorhergehenden Ansprüche, **dadurch gekennzeichnet, dass** die Reaktionszeit (RT) gemäß der folgenden Formel berechnet wird:

$$RT = R_0 + \beta \cdot I^{-\alpha},$$

wobei RT die zu ermittelnde Reaktionszeit bezeichnet, I die Reizintensität bezeichnet und $R_0$, $\alpha$ und $\beta$ jeweils einen Parameter bezeichnen.

6. Verfahren nach einem der vorhergehenden Ansprüche, **dadurch gekennzeichnet, dass**
die Reaktionszeit (RT) in Abhängigkeit von einem Helligkeitspegel des Umgebungsbereichs (6) ermittelt wird.

7. Verfahren nach einem der vorhergehenden Ansprüche, **dadurch gekennzeichnet, dass**
die Reaktionszeit (RT) in Abhängigkeit von mindestens einer Eigenschaft des Fahrers insbesondere in Abhängigkeit von dem Alter und/oder einem aktuellen Ermüdungspegel und/oder einem aktuellen Konzentrationspegel des Fahrers ermittelt wird.

8. Verfahren nach einem der vorhergehenden Ansprüche, **dadurch gekennzeichnet, dass**
das Bereitstellen der Funktionalität mithilfe des Fahrerassistenzsystems (3) umfasst, dass das Kraftfahrzeug (1) mindestens teilweise automatisch verlangsamt wird und/oder dass ein Warnsignal mithilfe einer elektronischen Ausgabevorrichtung ausgegeben wird.

9. Verfahren nach einem der vorhergehenden Ansprüche, **dadurch gekennzeichnet, dass** mithilfe des Fahrerassistenzsystems (3) insbesondere aufgrund von Bilddaten der Kamera (4) eine aktuelle Straßenbedingung ermittelt wird und dass der Zeitpunkt (t1, t2, t3) zum Bereitstellen der Funktionalität in Abhängigkeit von der Straßenbedingung ermittelt wird.

10. Fahrerassistenzsystem (3) für ein Kraftfahrzeug (1), wobei das Fahrerassistenzsystem (3) gestaltet ist zum Ausführen eines Verfahrens nach einem der vorhergehenden Ansprüche.

11. Kraftfahrzeug (1) mit einem Fahrerassistenzsystem (3) nach Anspruch 10.


**Revendications**

1. Procédé de fourniture d'une fonctionnalité au moyen d'un système d'assistance de conducteur (3) d'un véhicule automobile (1), comprenant les étapes suivantes :

   - la détection d'un objet (7) dans une région environnementale (6) du véhicule automobile (1) en fonction de données de capteur d'un dispositif de capteur (4) du système d'assistance de conducteur (3),
   - la détermination d'une distance actuelle (d) de l'objet (7) par rapport au véhicule automobile (1), et
   - la détermination d'un moment (ti, t2, t3) pour fournir la fonctionnalité en fonction de la distance actuelle (d),
   - la détermination d'un temps de réaction (RT) d'un conducteur, le conducteur devant prendre des mesures en raison de l'objet (7), le moment (t1, t2, t3) pour fournir la fonctionnalité étant déterminé en fonction du temps de réaction (RT),

   dans lequel
   l'objet (7) est détecté en fonction de données d'image d'une caméra et/ou en fonction de données de capteur d'un capteur infrarouge et/ou en fonction de données de capteur d'un capteur lidar comme dispositif de capteur (4)
   **caractérisé en ce que**
   le temps de réaction (RT) du conducteur est déterminé selon la loi de Piéron.

2. Procédé selon la revendication 1, **caractérisé en ce que**
   une intensité de stimulus (I) de l'objet (7) pour le conducteur est déterminée, et le temps de réaction (RT) est déterminé en fonction de l'intensité de stimulus (I).

3. Procédé selon la revendication 2, **caractérisé en ce que**
   en tant qu'intensité de stimulus (I) un niveau de visibilité de l'objet (7) est déterminé, lequel est déterminé en fonction d'au moins un des paramètres suivants :

   - en fonction d'une photométrie d'objet, en particulier un contraste de l'objet (7) par rapport à un fond, et/ou
   - en fonction de conditions atmosphériques dans la région environnementale (6) du véhicule automobile (1), et/ou
   - en fonction d'une géométrie de route et/ou de la présence d'une infrastructure routière.

4. Procédé selon la revendication 2 ou 3, **caractérisé en ce que**
   l'intensité de stimulus (I) est déterminée en fonction de données d'image d'une caméra et/ou en fonction de données de capteur d'un capteur infrarouge et/ou en fonction de données de capteur d'un capteur lidar en tant que dispositif de capteur (4).

5. Procédé selon l'une quelconque des revendications précédentes,
   **caractérisé en ce que**
   le temps de réaction (RT) est calculé selon la formule suivante :

$$RT = R_0 + \beta \cdot I^{-\alpha},$$

   où RT désigne le temps de réaction à déterminer, I désigne l'intensité de stimulus et $R_0$, $\alpha$ et $\beta$ désignent chacun un paramètre.

6. Procédé selon l'une quelconque des revendications précédentes, **caractérisé en ce que**
   le temps de réaction (RT) est déterminé en fonction d'un niveau de luminosité de la région environnementale (6).

7. Procédé selon l'une quelconque des revendications précédentes, **caractérisé en ce que**
   le temps de réaction (RT) est déterminé en fonction d'au moins une caractéristique du conducteur, en particulier en fonction de l'âge et/ou d'un niveau de fatigue actuel et/ou d'un niveau de concentration actuel du conducteur.

8. Procédé selon l'une quelconque des revendications précédentes, **caractérisé en ce que**
   la fourniture de la fonctionnalité au moyen du système d'assistance de conducteur (3) comporte la décélération au moins partiellement automatiquement du véhicule automobile (1) et/ou la production d'un signal d'avertissement au moyen d'un dispositif de sortie électronique.

9. Procédé selon l'une quelconque des revendications précédentes,
**caractérisé en ce que**
au moyen du système d'assistance de conducteur (3), en particulier en fonction de données d'image d'une caméra (4), un état de route actuel est déterminé, et le moment (t1, t2, t3) de fourniture de la fonctionnalité est déterminé selon l'état de route actuel.

10. Système d'assistance de conducteur (3) pour véhicule automobile (1), le système d'assistance de conducteur (3) étant formé pour mettre en oeuvre un procédé selon l'une quelconque des revendications précédentes.

11. Véhicule automobile (1) doté d'un système d'assistance de conducteur (3) selon la revendication 10.

Fig.1

Fig.2

11

Fig.3

EP 2 938 526 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 4201970 A1

- EP 1642769 A1

**Non-patent literature cited in the description**

- **JOULAN, K. et al.** Contrast Sensitivity Functions for Road Visibility Estimation on Digital Images. *IFST-TAR*